# EUROPEAN PATENT APPLICATION

(11) **EP 2 658 009 A1**
(43) Date of publication of application: **30.10.2013**
(21) Application number: 10861046.0
(22) Date of filing: 22.12.2010
(51) Int. Cl.: H01M 4/133, H01M 4/1393, H01M 10/052, H01G 9/00

(54) **ELECTRODE PLATE, PREPARING METHOD THEREFOR, SUPER CAPACITOR AND LITHIUM ION BATTERY**

(71) Applicant: Ocean's King Lighting Science&Technology Co., Ltd., Guangdong 518054 (CN)
(72) Inventor: ZHOU, Mingjie, Shenzhen, Guangdong 518054 (CN); PAN, Jun, Shenzhen, Guangdong 518054 (CN); WANG, Yaobing, Shenzhen, Guangdong 518054 (CN)
(74) Representative: Johnson, Richard Alan
(86) International application number: PCT/CN2010/080134
(87) International publication number: WO 2012/083537

(57) **Abstract**

An electrode plate is provided. The electrode plate includes a substrate and a coating coated on the substrate plate, wherein the coating includes fluoride oxide graphene materials. The fluoride oxide graphene material has excellent conductivity, so that the electrode material which is made of the graphene material has high energy density and electrical conduction efficiency. A preparing method for the electrode plate, and a super capacitor and a lithium ion battery both prepared with the electrode plate are also provided.

## Description

### FIELD OF THE INVENTION

The present invention relates to an electrode plate and preparing method thereof, as well as super capacitor and lithium ion battery provided with such electrode plate.

### BACKGROUND OF THE INVENTION

Super capacitors, also known as electrochemical capacitors having extraordinarily high capacity, are new energy storage devices between ordinary capacitors and secondary batteries. The amount of energy stored in super capacitors is over 10 times as great as that in conventional capacitors. Compared to batteries, super capacitors have greater power density, shorter charge and discharge time, higher charge and discharge efficiency, long cycle life, as well as wide working temperature range (-40∼75°C), good reliability, and advantages of energy-saving and environmental conservation, thus can be widely used as backup power supply for microcomputer, solar charger, warning device, household appliances, flashbulb of camera, ignition device of aircraft, and particularly the uses in the field of motor-driven cars being investigated have attracted worldwide attention.

Basically, high capacity, tiny size, high energy density and high power density are required for super capacitors and lithium ion batteries. According to the energy density formula, which is described by the equation E=1/2CU², an improvement of energy density can be achieved by increasing specific capacitance which has close relationship with its electrode materials. However, the electrode materials commonly used for producing super capacitors and lithium ion batteries have general problems of limited conductivity that cause difficulties in improving energy density of produced super capacitors and lithium ion batteries further.

### SUMMARY OF THE INVENTION

In view of this, it is necessary to provide an electrode plate of excellent conductivity.

An electrode plate comprising a substrate and a coating layer coated on the substrate, wherein the coating includes fluoride oxide graphene materials.

Preferably, the coating layer further includes conductive agent and binder, in addition, mass fractions of the conductive agent, binder and the fluoride oxide graphene materials that are separately represented by x, y, z, x+y+z=1, 2%<x<15%, 3%<y<15%, 75%<z<95%. More preferably, mass ratio of conductive agent, binder and fluoride oxide graphene materials can be 1:1:8, 1:1:18, 2.5:1:8.5.

Preferably, conductive agent is at least one of acetylene black, carbon nano tube, vapor grown carbon fiber, conductive graphite and conductive carbon black; binder is at least one of polyvinylidene fluoride and polytetrafluoroethylene.

Preferably, thickness of the coating layer is in the range of 10 to 200 µm.

The above-mentioned electrode plate made from fluoride oxide graphene having excellent conductivity has high energy density and electrical conduction efficiency. In addition, fluoride oxide graphene and electrolyte have good wettability, resistance to high pressure, and carbon can be formed in the discharge reaction of fluoride oxide graphene, utilization rate of materials is approximately 100%, internal resistance will not increase during the discharge reaction, the discharge voltage remains stable until the end of discharging, so that the whole electrode plate has great stability.

Moreover, it is necessary to provide a preparing method for electrode plate of excellent conductivity.

A preparing method for electrode plate comprising: preparing or providing fluoride oxide graphene materials, mixing said fluoride oxide graphene materials with conductive agent and binder to prepare coating agent; coating substrate with said coating agent to form a coating layer, drying then forming plate; rolling said plate and cutting into electrode plates.

Preferably, preparation for fluoride oxide graphene materials comprises: preparing graphene oxide with graphite raw materials; obtaining said fluoride oxide graphene materials by reacting said graphene oxide with mixed gases of N₂ and F₂ at 20∼200°C for 0.5∼24h.

Preferably, mass fractions of said conductive agent, binder and said fluoride oxide graphene materials are separately represented by x, y, z, x+y+z=1, 2%<x<15%, 3%<y<15%, 75%<z<95%. More preferably, mass ratio of conductive agent, binder and fluoride oxide graphene materials can be 1:1:8, 1:1:18, 2.5:1:8.5; said conductive agent is at least one of acetylene black, carbon nano tube, vapor grown carbon fiber, conductive graphite and conductive carbon black; said binder is at least one of polyvinylidene fluoride and polytetrafluoroethylene.

Preferably, thickness of said coating layer is in the range of 10 to 200 µm.

The above preparing method is easy to operate, has low demand for equipment, and can be applied widely.

Besides, it is necessary to provide super capacitor having high energy density, and lithium ion battery. Such super capacitor of high energy density and electrical conduction efficiency is provided with the above electrode plate. The above electrode plate can also be used as negative electrode of lithium ion battery, and the lithium ion battery has higher energy density and better stability.

### BRIEF DESCRIPTION OF THE DRAWINGS

Fig. 1 is a flow chart of preparing method for electrode plate of one embodiment;

Fig. 2 is charge-discharge curve of super capacitor of Example 1 at a constant current.

### DETAILED DESCRIPTION OF ILLUSTRATED EMBODIMENTS

Further description of electrode plate and preparing method thereof, super capacitor and lithium ion battery will be illustrated, which combined with embodiments in the drawings.

An electrode plate of one embodiment comprises a substrate and a coating layer coated on the substrate, wherein the coating layer includes fluoride oxide graphene materials.

Substrate is preferably metal substrate having excellent conductivity, such as aluminum substrate, copper substrate, nickel substrate, etc.

Thickness of the coating layer is in the range of 10 to 200µm. Preferably, the coating layer further includes conductive agent and binder, wherein mass fractions of conductive agent, binder and fluoride oxide graphene materials are separately represented by x, y, z, x+y+z=1,2%<x<15%, 3%<y<15%, 75%<z<95%; More preferably, mass ratio of conductive agent, binder and fluoride oxide graphene materials can be 1:1:8, 1:1:18, 2.5:1:8.5; conductive agent can be at least one of acetylene black, carbon nano tube, vapor grown carbon fiber, conductive graphite and conductive carbon black; binder can be at least one battery binders of polyvinylidene fluoride (PVDF) and polytetrafluoroethylene (PFTE).

Such electrode plate has high energy density and electrical conduction efficiency owing to fluoride oxide graphene from which the electrode plate is made. In addition, fluoride oxide graphene and electrolyte have good wettability, resistance to high pressure, and carbon can be formed in the discharge reaction of fluoride oxide graphene, utilization rate of materials is approximately 100%, internal resistance will not increase during the discharge reaction, the discharge voltage remains stable until the end of discharging, so that the whole electrode plate has great stability.

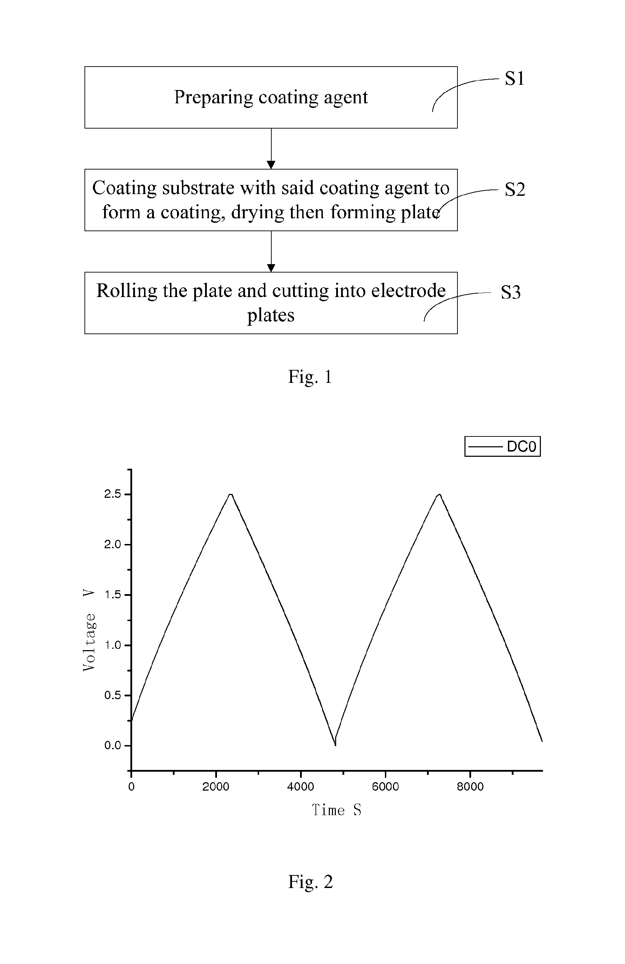

As shown in Fig. 1, a preparing method for the above-mentioned electrode plate, comprising:

Step S1: preparing or providing fluoride oxide graphene materials, mixing said fluoride oxide graphene materials with conductive agent and binder to prepare coating agent.

Wherein, fluoride oxide graphene can be made by traditional method or the method as follows:

Step S11, providing graphite raw materials, preparing graphene oxide with said graphite raw materials: adding graphite powders, potassium persulfate and phosphorus pentoxide into concentrated sulfuric acid at 70∼100°C, stirring thoroughly and cooling for over 6h, filtrating, washing the precipitates to neutrality, drying then adding into concentrated sulfuric acid at 0°C, after that, adding potassium permanganate and maintaining the temperature of the reaction system below 20°C for 2 to 4h, then keeping in an oil-bath at 35°C for 2 to 4h, subsequently, slowly adding solution of deionized water containing hydrogen peroxide until the reaction system becomes bright yellow in color, filtrating by applying pressure, washing precipitates with hydrochloric acid, vacuum drying to obtain graphene oxide.

Step S12, obtaining said fluoride oxide graphene materials by reacting said graphene oxide with mixed gases of N₂ and F₂ (hereinafter referred to as "mixed gases of fluoride and nitrogen") at 20 to 200°C for 0.5 to 24h: placing graphene oxide as dried into reactor and supplying dry nitrogen for 0.5 to 4h then supplying mixed gases of fluoride and nitrogen, reacting at 20 to 200°C for 0.5 to 24h, obtaining fluoride oxide graphene, wherein, fluoride accounts for 5∼30% of mixed gases of fluoride and nitrogen by volume ratio.

Mass fractions of conductive agent, binder and fluoride oxide graphene materials are represented by x, y and z, respectively, x+y+z=1,2%<x<15%, 3%<y<15%, 75%<z<95%; More preferably, mass ratio of conductive agent, binder and fluoride oxide graphene materials can be 1:1:8, 1:1:18, 2.5:1:8.5. Conductive agent can be at least one of acetylene black, carbon nano tube, vapor grown carbon fiber, conductive graphite and conductive carbon black; binder can be at least one of polyvinylidene fluoride and polytetrafluoroethylene.

Step S2: coating substrate with said coating agent to form a coating layer, drying then forming plate. Preferably, thickness of the coating layer is in the range of 10 to 200 µm.

Step S3: rolling said plate and cutting into electrode plates.

The above preparing method is easy to operate, has low demand for equipment, and can be applied widely.

The above-mentioned electrode plate can be applied in the field of manufacturing super capacitors and lithium ion batteries due to its excellent conductivity.

For example, super capacitor prepared by the above electrode plate has high energy density and electrical conduction efficiency. During the preparation of super capacitor, electrode plate, corresponding separator and electrolyte are assembled in glove box according to technique of manufacturing super capacitor; charge-discharge test is carried out after standing for one day. Herein, the separator used for super capacitor is preferably polypropylene separator, which can also be replaced by other separator commonly used in the prior art. Electrolyte used for super capacitor is conventional electrolyte (e.g. aqueous KOH, organic NMe₄BF₄) or ionic liquid electrolyte (e.g. LiTFSI/EMITFSI).

Lithium ion battery provided with the above electrode plate served as negative electrode has higher energy density and better stability. Herein, electrolyte commonly used for lithium ion battery can be organic electrolyte (e.g. LiF₆ PC EC) or ionic liquid electrolyte (e.g. LiTFSI/ BMITFSI). After assembling, battery is allowed to stand for 24h then tested.

The present invention will be described below in detail referring to preferred embodiments.

Example 1

(1) Preparation of electrode materials fluoride oxide graphene: graphite powders →graphene oxide →fluoride oxide graphene. Purity of the graphite powders used herein was 99.5%.

Preparation of graphene oxide: Graphene oxide was prepared by improved Hummers method. Firstly, 20g of 50-mesh sieved graphite powders, 10g of potassium persulfate and 10g of phosphorus pentoxide were added into concentrated sulfuric acid at 80°C while stirring thoroughly, then cooled for over 6h, filtrated. The precipitates were washed to neutrality, and then dried. The precipitates as dried were added into 230mL of concentrated sulfuric acid at 0°C, and then 60g of potassium permanganate were added. The temperature of mixture was maintained below 20°C then kept in an oil-bath at 35°C for 2h; subsequently, 920mL of deionized water were slowly added. After 15 minutes, 2.8L of deionized water were added (contains 50mL of hydrogen peroxide having concentration of 30%), then the mixture became bright yellow in color were filtrated by applying pressure, and washed with 5L of hydrochloric acid having concentration of 10%, filtrated, vacuum dried at 60°C for 48 to obtain graphene oxide.

Preparation of fluoride oxide graphene: the graphene oxide as dried were placed into reactor, dry nitrogen was supplied firstly for 1.5h, then mixed gases of fluoride and nitrogen was supplied for reacting with graphene at 100°C for 1h, fluoride oxide graphene was obtained. Herein, fluoride accounts for 10% of mixed gases of fluoride and nitrogen, nitrogen was served to dilute.

(2) Preparation of electrode plates: plate → rolling plate → electrode plates.

Preparation of plate: 1.5g of fluoride oxide graphene, 0.25g of acetylene black, 0.25g of polyvinylidene fluoride were weighed and mixed. N-Methyl pyrrolidone (NMP) was dripped into the mixture to make it become pulpy. After being thoroughly stirred and mixed, the mixture was used to coat metal aluminium foil where the thickness of coating layer was 200 µm, then vacuum dried at 100°C for 12h and taken out to form said plate.

Rolling plate: The obtained plate was rolled with rolling mill, the thickness after rolling became 165 µm.

Cutting plate: the rolled plate was cut into circular electrode plates in the size of 10mm with puncher, and weighed accurately.

(3) Assembling of super capacitor: electrode plate, separator and electrolyte were assembled into super capacitor in glove box according to technique of manufacturing super capacitor. Herein, separator was celgard2000 (product from the U.S.), electrolyte was 0.5mol/L solution of 1-ethyl-3-methylimidazolium tetrafluoroborate.

Fig. 2 is charge-discharge curve of super capacitor as prepared at a constant current. (Abscissa: time, unit: second (s); ordinate: voltage, unit: volt (V)), where voltage was in the range of 0∼2.0V, electric current was 1A/g electrode plate. It can be seen from Fig. 2 that the charge-discharge curve of such super capacitor exhibited great linear characteristics; charge-discharge curve at a constant current shaped like an isosceles triangle indicated that there was a linear relation between potential and time shown in discharge curve, double-layer characteristics showed up obviously, small voltage drop suggested internal resistance of materials was very low, which is suitable for charging and discharging rapidly, the capacitance was 90.38 F/g. It can be seen from Tab. 1 that charge specific capacity of the super capacitor was 98.75 F/g, discharge specific capacity was 90.38 F/g, and charge/discharge efficiency was 91.52%, the charge/discharge efficiency was superior.

Example 2

(1) Preparation of electrode materials fluoride oxide graphene: the same as Example 1.

(2) Preparation of electrode plates: plate →rolling plate →electrode plates.

Preparation of plate: 2.5g of fluoride oxide graphene, 0.25g of vapor grown carbon fiber, 0.25g of polytetrafluoroethylene were weighed and mixed. Ethanol was dripped into the mixture to make it become pulpy. After being thoroughly stirred and mixed, the mixture was used to coat nickel foam where the thickness of coating layer was 160 µm, then vacuum dried at 100°C for 12h and taken out to form said plate.

Rolling plate: The obtained plate was rolled with rolling mill, the thickness after rolling became 120 µm.

Cutting plate: the rolled plate was cut into circular electrode plates in the size of 8mm with puncher, and weighed accurately.

(3) Assembling of super capacitor: electrode plate, separator and electrolyte were assembled into super capacitor in glove box according to technique of manufacturing super capacitor. Herein, separator was celgard2000 (product from the U.S.), electrolyte was 1mol/L solution of potassium hydroxide. It can be seen from Tab. 1 that charge specific capacity of the super capacitor was 185.69 F/g, discharge specific capacity was 182.36 F/g, and charge/discharge efficiency was 98.21 %, the charge/discharge efficiency was superior.

Example 3

(1) Preparation of electrode materials fluoride oxide graphene: the same as Example 1.

(2) Preparation of electrode plates: plate →rolling plate →electrode plates.

Preparation of plate: 3.75g of fluoride oxide graphene, 0.25g of carbon nano tube, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 80 µm, then vacuum dried at 100°C for 12h and taken out to form said plate.

Rolling plate: The obtained plate was rolled with rolling mill, the thickness after rolling became 50 µm.

Cutting plate: the rolled plate was cut into circular electrode plates in the size of 12mm with puncher, and weighed accurately.

(3) Assembling of super capacitor: electrode plate, separator and electrolyte were assembled into super capacitor in glove box according to technique of manufacturing super capacitor. Herein, separator was celgard2000 (product from the U.S.), electrolyte was 1mol/L NMe₄BF₄/PC₆ solution. It can be seen from Tab. 1 that charge specific capacity of the super capacitor was 101.35 F/g, discharge specific capacity was 95.36 F/g, and charge/discharge efficiency was 94.09%, the charge/discharge efficiency was superior.

Example 4

(1) Preparation of electrode materials fluoride oxide graphene: the same as Example 1.

(2) Preparation of electrode plates: plate →rolling plate →electrode plates.

Preparation of plate: 5.0g of fluoride oxide graphene, 0.25g of conductive graphite, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 50 µm, then vacuum dried at 100°C for 12h and taken out to form said plate.

Rolling plate: The obtained plate was rolled with rolling mill, the thickness after rolling became 40 µm.

Cutting plate: the rolled plate was cut into circular electrode plates in the size of 12mm with puncher, and weighed accurately.

(3) Assembling of super capacitor: electrode plate, separator and electrolyte were assembled into super capacitor in glove box according to technique of manufacturing super capacitor. Herein, separator was celgard2000 (product from the U.S.), electrolyte was 1mol/L NMe₄BF₄/PC₆ solution. It can be seen from Tab. 1 that charge specific capacity of the super capacitor was 112.69 F/g, discharge specific capacity was 108.63 F/g, and charge/discharge efficiency was 96.40%, the charge/discharge efficiency was superior.

Example 5

(1) Preparation of electrode materials fluoride oxide graphene: the same as Example 1.

(2) Preparation of electrode plates: plate →rolling plate →electrode plates.

Preparation of plate: 6.25g of fluoride oxide graphene, 0.25g of conductive graphite, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 100 µm, then vacuum dried at 100°C for 12h and taken out to form said plate.

Rolling plate: The obtained plate was rolled with rolling mill, the thickness after rolling became 80 µm.

Cutting plate: the rolled plate was cut into circular electrode plates in the size of 12mm with puncher, and weighed accurately.

(3) Assembling of super capacitor: electrode plate, separator and electrolyte were assembled into super capacitor in glove box according to technique of manufacturing super capacitor. Herein, separator was celgard2000 (product from the U.S.), electrolyte was 1mol/L NMe₄BF₄/PC₆ solution. It can be seen from Tab. 1 that charge specific capacity of the super capacitor was 98.87 F/g, discharge specific capacity was 90.65 F/g, and charge/discharge efficiency was 91.69%, the charge/discharge efficiency was superior.

Example 6

(1) Preparation of electrode materials fluoride oxide graphene: the same as Example 1.

(2) Preparation of electrode plates: plate →rolling plate →electrode plates.

Preparation of plate: 7.5g of fluoride oxide graphene, 0.25g of carbon nano tube, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 50 µm, then vacuum dried at 100°C for 12h and taken out to form said plate.

Rolling plate: The obtained plate was rolled with rolling mill, the thickness after rolling became 45 µm.

Cutting plate: the rolled plate was cut into circular electrode plates in the size of 12mm with puncher, and weighed accurately.

(3) Assembling of super capacitor: electrode plate, separator and electrolyte were assembled into super capacitor in glove box according to technique of manufacturing super capacitor. Herein, separator was celgard2000 (product from the U.S.), electrolyte was 1mol/L NMe₄BF₄/PC₆ solution. It can be seen from Tab. 1 that charge specific capacity of the super capacitor was 92.98 F/g, discharge specific capacity was 88.56 F/g, and charge/discharge efficiency was 95.25%, the charge/discharge efficiency was superior.

Example 7

(1) Preparation of electrode materials fluoride oxide graphene: the same as Example 1.

(2) Preparation of electrode plates: plate →rolling plate →electrode plates.

Preparation of plate: 9.5g of fluoride oxide graphene, 0.25g of carbon nano tube, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 20 µm, then vacuum dried at 100°C for 12h and taken out to form said plate.

Rolling plate: The obtained plate was rolled with rolling mill, the thickness after rolling became 15 µm.

Cutting plate: the rolled plate was cut into circular electrode plates in the size of 12mm with puncher, and weighed accurately.

(3) Assembling of super capacitor: electrode plate, separator and electrolyte were assembled into super capacitor in glove box according to technique of manufacturing super capacitor. Herein, separator was celgard2000 (product from the U.S.), electrolyte was 1mol/L NMe₄BF₄/PC₆ solution. It can be seen from Tab. 1 that charge specific capacity of the super capacitor was 103.29 F/g, discharge specific capacity was 98.46 F/g, and charge/discharge efficiency was 95.32%, the charge/discharge efficiency was superior.

Example 8

(1) Preparation of electrode materials fluoride oxide graphene: the same as Example 1.

(2) Preparation of electrode plates: plate →rolling plate →electrode plates.

Preparation of plate: 3g of fluoride oxide graphene, 0.5g of carbon nano tube, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 10 µm, then vacuum dried at 100°C for 12h and taken out to form said plate.

Rolling plate: The obtained plate was rolled with rolling mill, the thickness after rolling became 8 µm.

Cutting plate: the rolled plate was cut into circular electrode plates in the size of 12mm with puncher, and weighed accurately.

(3) Assembling of super capacitor: electrode plate, separator and electrolyte were assembled into super capacitor in glove box according to technique of manufacturing super capacitor. Herein, separator was celgard2000 (product from the U.S.), electrolyte was 1mol/L NMe₄BF₄/PC₆ solution. It can be seen from Tab. 1 that charge specific capacity of the super capacitor was 104.37 F/g, discharge specific capacity was 95.26 F/g, and charge/discharge efficiency was 91.27%, the charge/discharge efficiency was superior.

Example 9

(1) Preparation of electrode materials fluoride oxide graphene: the same as Example 1.

(2) Preparation of electrode plates: plate →rolling plate →electrode plates.

Preparation of plate: 4.0g of fluoride oxide graphene, 0.5g of carbon nano tube, 0.25g of polyvinylidene fluoride were weighed and mixed. NMP was dripped into the mixture to make it become pulpy. After being thoroughly stirred and mixed, the mixture was used to coat metal copper foil where the thickness of coating layer was 80 µm, then vacuum dried at 100°C for 12h and taken out to form said plate.

Rolling plate: The obtained plate was rolled with rolling mill, the thickness after rolling became 50 µm.

Cutting plate: the rolled plate was cut into circular electrode plates in the size of 12mm with puncher, and weighed accurately.

(3) Assembling of lithium ion battery: lithium ion battery was assembled from electrode plate which was served as negative electrode, corresponding positive electrode of battery, shell and electrolyte in glove box according to technique of manufacturing lithium ion battery. The electrolyte was ionic liquid electrolyte LiTFSI / BMITFSI.

Tab. 1 charge/ discharge specific capacity and charge/discharge efficiency of super capacitor

| **Example** | Charge specific capacity (F/g) | Discharge specific capacity (F/g) | Charge/discharge efficiency |
|---|---|---|---|
| **Example 1** | 98.75 | 90.38 | 91.52% |
| **Example 2** | 185.69 | 182.36 | 98.21% |
| **Example 3** | 101.35 | 95.36 | 94.09% |
| **Example 4** | 112.69 | 108.63 | 96.40% |
| **Example 5** | 98.87 | 90.65 | 91.69% |
| **Example 6** | 92.98 | 88.56 | 95.25% |
| **Example 7** | 103.29 | 98.46 | 95.32% |
| **Example 8** | 104.37 | 95.26 | 91.27% |

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the spirit and scope of the present invention. Accordingly, the scope of the present invention is described by the appended claims and is supported by the foregoing description.

## Claims

1. An electrode plate comprising a substrate and a coating layer coated on said substrate, wherein said coating layer includes fluoride oxide graphene materials.

2. The electrode plate as claimed in claim 1, wherein said coating layer further includes conductive agent and binder, in addition, mass fractions of said conductive agent, binder and said fluoride oxide graphene materials are separately represented by x, y, z, x+y+z=1,2%<x<15%, 3%<y<15%, 75%<z<95%.

3. The electrode plate as claimed in claim 2, wherein said conductive agent is at least one of acetylene black, carbon nano tube, vapor grown carbon fiber, conductive graphite and conductive carbon black; said binder is at least one of polyvinylidene fluoride and polytetrafluoroethylene.

4. The electrode plate as claimed in claim 1, wherein thickness of said coating layer is in the range of 10 to 200 µm.

5. A preparing method for electrode plate, wherein comprising:
preparing or providing fluoride oxide graphene materials, mixing said fluoride oxide graphene materials with conductive agent and binder to prepare coating agent;
coating substrate with said coating agent to form a coating layer, drying then forming plate;
rolling said plate and cutting into electrode plates.

6. The preparing method for electrode plate as claimed in claim 5, wherein said preparation for fluoride oxide graphene materials comprises:
preparing graphene oxide with graphite raw materials;
obtaining said fluoride oxide graphene materials by reacting said graphene oxide with mixed gases of N₂ and F₂ at 20∼200°C for 0.5∼24h.

7. The preparing method for electrode plate as claimed in claim 5, wherein mass fractions of said conductive agent, binder and said fluoride oxide graphene materials are separately represented by x, y, z, x+y+z=1,2%<x<15%, 3%<y<15%, 75%<z<95%; said conductive agent is at least one of acetylene black, carbon nano tube, vapor grown carbon fiber, conductive graphite and conductive carbon black; said binder is at least one of polyvinylidene fluoride and polytetrafluoroethylene.

8. The preparing method for electrode plate as claimed in claim 5, wherein thickness of said coating layer is in the range of 10 to 200 µm.

9. A super capacitor, wherein provided with electrode plate as claimed in any one of the claims from 1 to 4.

10. A lithium ion battery provided with negative electrode, wherein said negative electrode is electrode plate as claimed in any one of the claims from 1 to 4.
